# EUROPEAN PATENT SPECIFICATION

(11) **EP 3 802 041 B1**
(45) Date of publication and mention of the grant of the patent: **28.06.2023**
(21) Application number: 19729851.6
(22) Date of filing: 15.05.2019
(51) Int. Cl.: B29C 33/30, A43B 13/18, B29C 31/04, B29C 33/34, B29D 35/12, B29C 39/00, B29C 39/24, B29C 39/26, B29C 39/44, B29C 44/02, B29L 31/50, B29K 105/04, B29K 75/00, B29C 41/06, B29C 41/36, B29C 41/38, B29C 44/36

(54) **MOLDING STATION AND MOLDING METHOD WITH AN ORBITAL MOLD HOLDER**
FORMSTATION UND FORMVERFAHREN MIT EINEM ORBITALFORMHALTER
STATION DE MOULAGE ET PROCÉDÉ DE MOULAGE AVEC UN PORTE-MOULE ORBITAL

(30) Priority: 24.05.2018 IT 201800005664
(43) Date of publication of application: 14.04.2021
(73) Proprietor: Ama.Gusberti S.r.l., 27029 Vigevano (Pavia) (IT)
(72) Inventor: GRECO, Stefano, 27029 Vigevano (Pavia) (IT)
(74) Representative: Belloni, Giancarlo
(86) International application number: PCT/IB2019/054015
(87) International publication number: WO 2019/224661

(56) References cited:
- EP-A1- 2 205 116
- EP-A1- 2 969 444
- EP-A1- 2 982 491
- DE-A1-102015 108 086
- GB-A- 1 105 780
- JP-A- 2000 317 954
- Simac Tanning Tech: "AMA GUSBERTI", , 22 May 2018 (2018-05-22), pages 1-3, XP054979137, Retrieved from the Internet: URL:https://www.youtube.com/watch?v=kEbiQu hVYm0 [retrieved on 2019-02-14]

## Description

The present invention relates to an orbital mold holder, in particular a mold holder intended for the use with molds for manufacturing polyurethane (PU) items, *e*.*g*. expanded polyurethane and/or compact polyurethane items.

In the following description, molds and mold holders used for manufacturing semi worked items for footwear, *e*.*g*. soles, will be considered in detail. However, the skilled person can easily understand that such reference has no limiting intent and that the teachings and solutions according to the present invention can easily be used in other related technical fields.

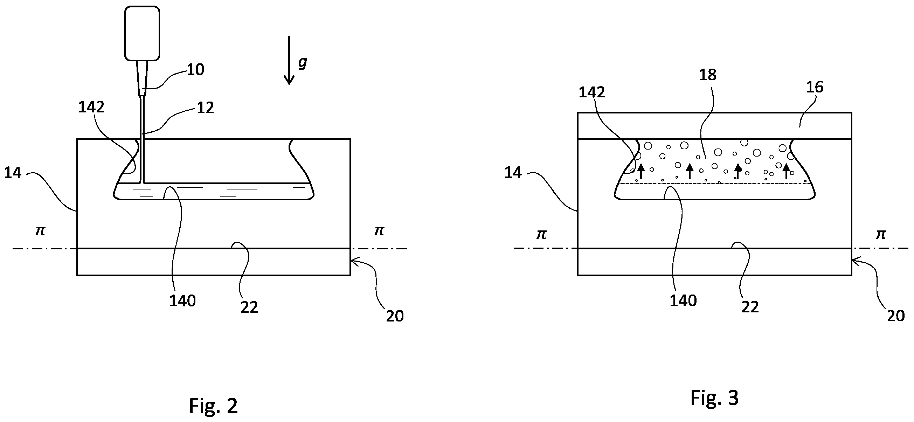

The known manufacturing method of polyurethane semi worked items for footwear is described below with particular reference to figures 2 and 3.

In a known manner, the manufacturing of polyurethane semi worked items for footwear takes place by molding a flexible foam. The components constituting the polyurethane, *i.e.* the polyol, the di-isocyanate and the related additives, are mixed near a dispensing nozzle 10. Therefore, the nozzle 10 pours the polyurethane mixture 12 in liquid state into a mold 14 which is shaped so as to define the final shape of the semi worked item (figure 2). As soon as the liquid polyurethane mixture 12 has been poured, the mold 14 is immediately closed by the special cover 16, so as to completely delimit the cavity. Inside the mold 14 the reaction between the polyol and the di-isocyanate generates CO₂ which expands to form diffused micro-cavities within the polyurethane volume. In other words, the polyurethane increases its volume, passing from the initial liquid state 12 to the foam state 18. In about 180 seconds the polyurethane increases its volume approximately three times, thus completely filling the cavity of the mold 14 and giving rise to the desired semi worked items. After removal from the mold 14, in 24-48 hours the polyurethane foam 18 reaches the necessary maturation and the semi worked item is ready for subsequent processing.

To facilitate the removal of the semi worked item, before pouring, it is known to spray the inside of the mold with a silicone-based preparation which prevents direct contact and therefore adhesion between the polyurethane and the walls of the mold.

Furthermore, in order to give the semi worked item a more valuable aspect, before pouring, it is known to spray the inside of the mold with a paint intended to constitute an outer coating layer of the semi worked item. In light of the brief description given above, it is evident that the polyurethane semi worked items are particularly appreciated for their rapid, simple and cheap realisation.

Such manufacturing method, although widely spread and appreciated, is not free of drawbacks.

In fact, during the initial volume increase, the polyurethane does not maintain a homogeneous composition therein. In particular, it can be seen that the polyurethane foam 18 comprises very small and regular cavities in the volume initially occupied by the liquid phase 12, and then includes larger and more irregular cavities proceeding along the direction of volume increase. This phenomenon is represented by a rough diagram in figure 3, where a dotted line defines the volume initially occupied by the polyurethane in liquid phase 12 and where the arrows indicate the direction of volume increase during the passage to the foam phase 18. Figure 3 also schematically shows the bubbles which are included in the polyurethane foam 18 and whose dimensions grow along the direction of volume increase.

This behaviour of the polyurethane during the initial phase of the manufacturing causes a deterioration of the quality of the material along the direction of volume increase. In fact, the lower surface of the semi worked item, originating in the part of mold 14 initially wetted by the polyurethane in liquid phase 12, is homogeneous and compact. Here, the cavities included in the polyurethane foam 18 are microscopic and not visible and this gives this part of the semi worked item a high-quality appearance. Conversely, the upper surface of the semi worked item, which originates in the portion of mold 14 filled thanks to the growth of the volume of the polyurethane foam 18, is characterized by the presence of macroscopic cavities and bubbles distributed in an irregular manner. This gives this part of the semi worked item a low-quality appearance.

Usually, the less valuable part of the semi worked item is almost completely covered by the upper structure of the footwear, but, in any case, a side band which determines a severe limitation for the overall quality of the footwear remains visible.

Such effect is particularly accentuated in the event that the mold 14 comprises a marked undercut (as in the diagram of figures 2 and 3) intended to obtain a sole that widens very much downwards. In this case, in fact, due to the particular sectional shape of the sole, the low-quality foam band is particularly extensive and visible. Moreover, the undercut of the mold 14 slows down the ascent of the bubbles which thus tend to aggregate and originate the undesired cavities.

A further effect of the undercut is to make the spray application of the silicone-based preparation and/or of the coating paint of the semi worked item more complicated.

Different apparatuses and methods which use movable surfaces or molds are known in the art. For example, EP 2 982 491 A1 discloses a method of manufacturing articles, for example a sole for an article of footwear, by extruding one or more solid elongated members with an extruder in a controlled geometric pattern onto a surface. The extruder can move according to a pattern while extruding an extruded member onto a surface, alternatively the surface can move according to a pattern while the extruder remains stationary or both extruder and surface can move according to a pattern while the extruded member is extruded onto the surface. The surface is provided with six degrees of freedom and both extruder and surface can move in each of the x-, y-, and z-directions and both extruder and surface can rotate in each of these directions allowing for roll, pitch, and yaw. For example, articles of apparel can be formed by extruding one or more extruded members over, on, around, or in a shaped mold or cast. EP 2 205 116 A1 discloses a manufacturing method, wherein material is extruded into a mold which is seated on a movable X-Y table while the mold is moved in the X and Y directions by manipulating the X-Y table. EP 2 969 444 A1 A discloses a dispensing system that deposits a predetermined amount of liquid phase polyurethane mixture onto the flat surface of a mold in a predetermined pattern, the mold being moved in horizontal direction under the dispensing system by a conveyance mechanism. US 3 455 483 A discloses a rock and roll casting apparatus and method for internally coating a container. DE 10 2015 108086

A1 discloses an apparatus and manufacturing method wherein a mixing head is moved with a pattern over a mould. GB 1 105 780 A discloses a rotational casting apparatus wherein a liquid vinyl composition is introduced into a mold, and the mold is moved orbitally about a first axis and rotationally about a second axis. JP 2000 317954 A discloses a rock and roll casting apparatus wherein a cylindrical mold is filled with liquid molding material, the mold is rotated coaxially with respect to its longitudinal axis which is combined with a rocking motion.

Therefore, the object of the present invention is to overcome the drawbacks underlined before with respect to the known art. In particular, a task of the present invention is to provide a molding station and a method for manufacturing polyurethane semi worked items, which allow the semi worked item to have a more valuable appearance.

Such object and such aims are achieved by a molding station according to claim 1 and by a molding method according to claim 7.

To better understand the invention and appreciate its advantages, some of its exemplifying and non-limiting embodiments are described below with reference to the accompanying drawings, wherein:

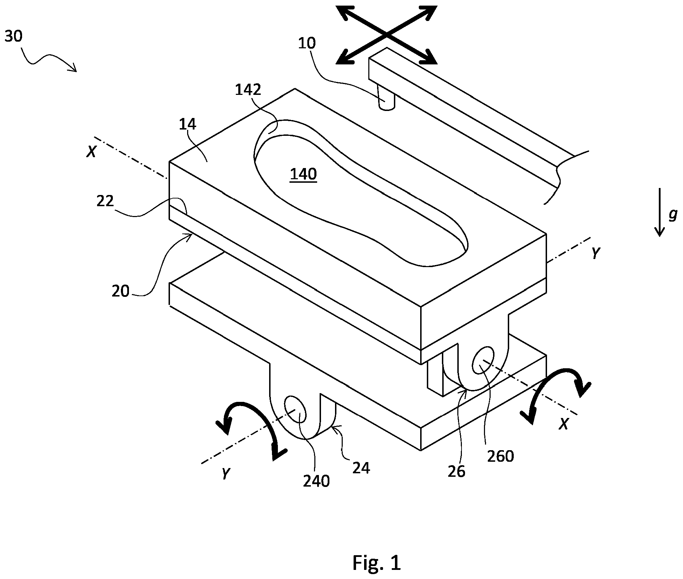

- figure 1 schematically shows an axonometric view of a molding station according to the invention;
- figure 2 schematically shows a section of a molding station according to the prior art during a first processing step;
- figure 3 schematically shows a section of the molding station of figure 2, during a second processing step;
- figure 4 schematically shows a section of a molding station according to the invention during a first processing step;
- figure 5 schematically shows a section of the molding station of figure 4, during a second processing step;
- figure 6 shows a block diagram of a molding station according to the invention;

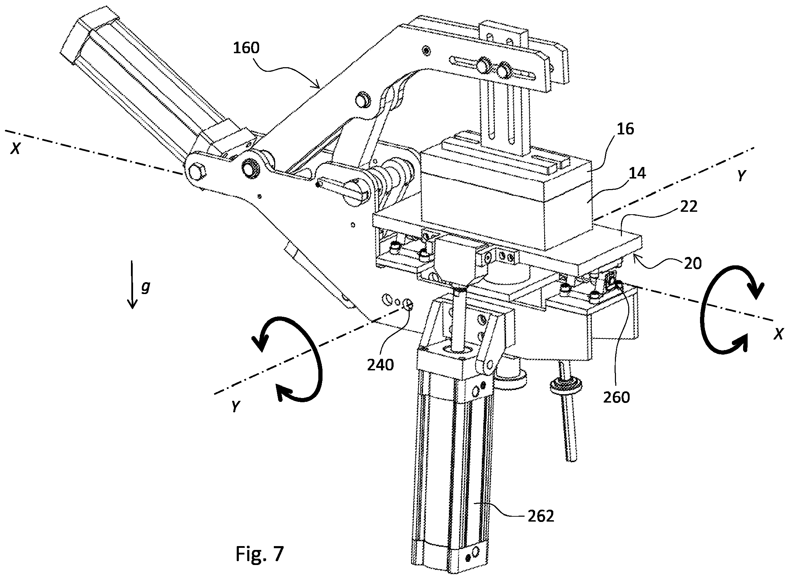

- figure 7 shows an axonometric view of a mold-mold holder assembly according to the invention;

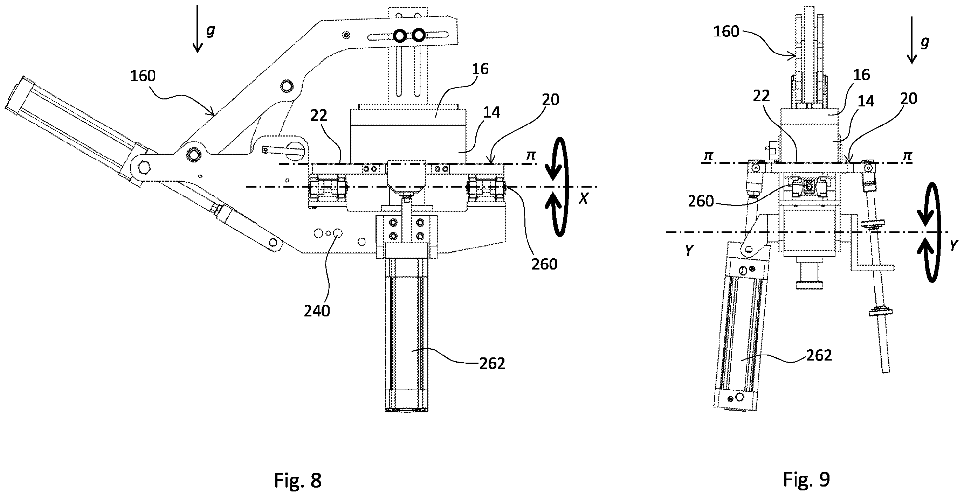

- figure 8 shows a side view of the assembly of figure 7; and
- figure 9 shows a front view of the assembly of figure 7.

A mold holder 20 comprises a rest surface 22 suitable for holding a mold 14 for manufacturing polyurethane semi worked items, wherein the mold holder 20 comprises means 24 for rotating the rest surface 22 around a pitch axis y and wherein the mold holder 20 further comprises means 26 for rotating the rest surface 22 around a roll axis x.

In the context of the present discussion, some terminological conventions have been adopted in order to make reading easier and smoother. These terminological conventions are clarified below with reference to the appended figures.

The terms "pitch" and "roll" hereinafter refers to two distinct degrees of rotational freedom. Since the mold 14 intuitively defines a longitudinal direction and a transverse direction, here, a general rule, similar to that commonly assumed in the context of vehicles and aircraft, is assumed. In particular, the pitch indicates the rotation around any transverse axis (in particular around the axis y), while the roll indicates the rotation around any longitudinal axis (in particular around the axis x). As is evident to the skilled person, a different general rule, e.g. an opposite one, could have been assumed without changing anything except the way of describing the invention.

Since the invention is designed to be used in presence of gravitational acceleration g, it is intended that the latter unequivocally defines the vertical direction. Likewise, it is understood that, based on gravitational acceleration g, the terms "high", "higher", "above" and the like are defined unequivocally, with respect to the terms "low", "lower", "below" and the like. Finally, based on the gravitational acceleration g, the horizontal direction is defined unequivocally.

Preferably, the rest surface 22 mainly develops in a plane π and the projections on the plane π of the pitch axis y and of the roll axis x are perpendicular the one to the other. Advantageously, the mold holder 20 is able to take a basic configuration wherein the plane π is horizontal. According to some embodiments, the means 24 for rotating the rest surface 22 around the pitch axis y comprise a pitch hinge 240 and a pitch actuator 242. Likewise, according to some embodiment, the means 26 for rotating the rest surface 22 around the roll axis x comprise a roll hinge 260 and a roll actuator 262.

According to an embodiment, the pitch actuators 242 and/or the roll actuators 262 comprise electronically controlled electric motors. This specific solution has considerable advantages, which will be described below in more detail, but other solutions are possible. Alternatively, the pitch and/or roll actuators may comprise pneumatic or hydraulic linear motors. Moreover, such actuators can be electrically controlled by means of a timer, or they can also be mechanically controlled by means of cams or the like.

The molding station 30 for manufacturing polyurethane semi worked items, in addition to the mold holder 20, also comprises a dispensing nozzle 10 of the polyurethane in liquid state 12. The dispensing nozzle 10 in turn comprises moving means 32 and dispensing control means 34. The moving means 32 and/or the dispensing control means 34 are electronically controlled. This specific solution has considerable advantages, which will be described below in more detail, but other solutions are possible. Alternatively, the moving means 32 and/or the dispensing control means 34 can be electrically controlled by means of a timer. They can also be mechanically controlled by means of cams or the like, which is not part of the invention.

By way of example, the dispensing control means 34 can comprise a solenoid valve which alternately opens and closes a duct from which the liquid polyurethane 12 is dispensed by gravity.

Still by way of example, the moving means 32 of the dispensing nozzle 10 can advantageously comprise a Cartesian robot or an anthropomorphic robot.

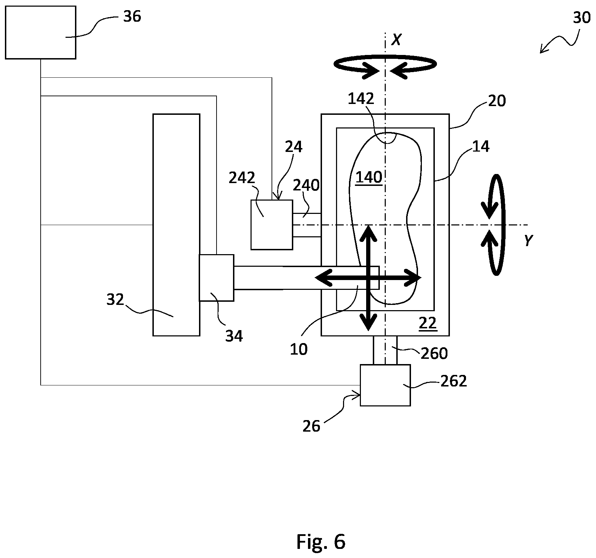

According to some embodiments of the invention (e.g. the one represented in the block diagram of figure 6), the molding station 30 comprises a control unit 36 suitable for electronically controlling one or more of the following components: the electric motor of the pitch actuator 240, the electric motor of the roll actuator 260, the moving means 32, the dispensing control means 34 of the dispensing nozzle 10. Preferably, the control unit 36 is suitable for simultaneously controlling all these components, so as to be able to coordinate their operation according to a predefined logic. A predefined logic which is particularly advantageous for the operation of the molding station 30 will be described in more detail below.

The molding station 30 preferably also comprises a mold 14 which can be constrained to the rest surface 22 of the mold holder 20. The specific mold 14 can be selected in a series of different molds which are intended for manufacturing different polyurethane semi worked items, e.g. soles different in terms of model or size.

Usually, the mold 14 comprises a bottom wall 140 and side walls 142, so as to define a cavity which can be closed by the appropriate cover 16. Depending on the case, in a manner known *per se,* the cavity of the mold 14 can be completely closed, or vent paths can be provided to facilitate the exit of the CO₂ formed in the polyurethane mass.

Preferably, the molding station 30 further comprises a mechanism 160 for opening/closing the mold 14. The mechanism 160 is suitable for moving the cover 16 with respect to the mold 14, between an open position and a closed position. Preferably, the mechanism 160 is electronically controlled by the control unit 36. In this way the control unit 36 can control the mechanism 160 together with all the other components described above, according to a predefined logic.

According with another aspect, the invention relates to a molding method for manufacturing the polyurethane semi worked items. The method comprises the steps of:
- providing a mold holder 20 comprising:
   - a rest surface 22,
   - means 24 for rotating the rest surface 22 around a pitch axis y, and
   - means 26 for rotating the rest surface 22 around a roll axis x;
- securing a mold 14 on the rest surface 22 of the mold holder 20;
- providing a nozzle 10 for dispensing polyurethane in liquid state 12;
- dispensing polyurethane in liquid state 12 in the mold 14; and
- during the step of dispensing polyurethane, rotating the mold holder 20 around the pitch axis y and/or around the roll axis x.

Preferably, during the step of dispensing polyurethane, the method also comprises the further step of moving the dispensing nozzle 10 in a direction parallel to the pitch axis y and/or in a direction parallel to the roll axis x.

As is well known to the skilled person, immediately after mixing the components that constitute the polyurethane (the polyol, the di-isocyanate and any other additives) the resulting mixture remains temporarily in liquid state, to then enter a phase called cream phase, wherein it remains for a time that can last from about 5 to 10 seconds. Following the cream phase, the CO₂ begins to develop in the polyurethane mass and the foam begins to form. For the purposes of the present discussion it is not necessary to distinguish the liquid phase from the cream phase, and these two phases (called in their complex "liquid phase" or indifferently "liquid state") are distinguished only by the subsequent phase in which the foam develops. According to the method of the invention, the polyurethane is poured into the mold 14 while it is in the liquid phase, immediately after mixing the relative components. Therefore, the step of dispensing the polyurethane in liquid state 12 is equivalent to a step of vertically pouring the polyurethane in liquid state 12. The polyurethane, which is simply poured by gravity or which is moderately pushed by any slight pressure present in the component supply circuits, fall in the vertical direction from the nozzle 10 into the mold 14.

Preferably, the method of the invention, after the step of dispensing the polyurethane in liquid state 12 in the mold 14, comprises the further step of closing the mold 14 cavity by means of the cover 16 while the polyurethane is in liquid state 12.

Preferably, the method of the invention provides for hosting inside the closed mold 14 the reaction based on which the polyurethane passes from the liquid state 12 to the foam state 18.

In the method according to the invention, two or more of the steps described above are jointly electronically controlled according to a predefined logic. In other words, two or more among the steps of:
- dispensing polyurethane;
- rotating the mold holder 20 around the pitch axis y;
- rotating the mold holder 20 around the roll axis x;
- moving the dispensing nozzle 10 in a direction parallel to the pitch axis y; and
- moving the dispensing nozzle 10 in a direction parallel to the roll axis x; they are jointly controlled, *e*.*g*. by the control unit 36 according to a predefined logic.

A predefined logic which is particularly advantageous for the operation of the molding station 30 and for carrying out the method according to the invention provides that the mold holder 20 is rotated around the pitch axis y and/or around the roll axis x, in a manner such as to expose the side walls 142 of the mold 14 to the flow of liquid polyurethane 12 dispensed by the dispensing nozzle 10.

According to an embodiment, the operating logic of the molding station 30 provides for the mold holder 20 to be rotated so as to expose a portion of the side wall 142 to the direct vertical flow of polyurethane. Then the nozzle 10 is positioned on the vertical of such portion of wall 142 and dispensing is started. During the dispensing of the liquid polyurethane 12, the mold holder 20 is gradually rotated so as to expose successive portions of the outer walls. At the same time the nozzle 10 is moved so as to always remain on the vertical of the portion of the wall 142 which is gradually exposed. In this way the mold holder 20 completes an overall rotation, composed of opposite pitch rotations and of opposite roll rotations. At the end of the overall rotation the mold holder 20 returns to its initial position where the dispensing of the liquid polyurethane 12 had begun. Similarly, the dispensing nozzle 10 performs an overall movement, composed of opposite movements along the pitch axis and of opposite movements along the roll axis, at the end of which it returns to its initial position where the dispensing of liquid polyurethane 12 had started. Along the closed path travelled by the nozzle 10, the quantity of polyurethane required for the manufacturing the semi worked item is dispensed. Therefore, such quantity of polyurethane, in addition to wetting the side walls 142 of the mold 14, will also, by gravity, wet the bottom wall 140.

At the end of the dispensing, as also in the prior art, the mold 14 is immediately closed by the special cover 16, so as to completely delimit the cavity. In a known manner, inside the mold 14 the reaction between the polyol and the di-isocyanate generates CO₂ which expands, and the polyurethane increases its volume, passing from the initial liquid state 12 to the foam state 18.

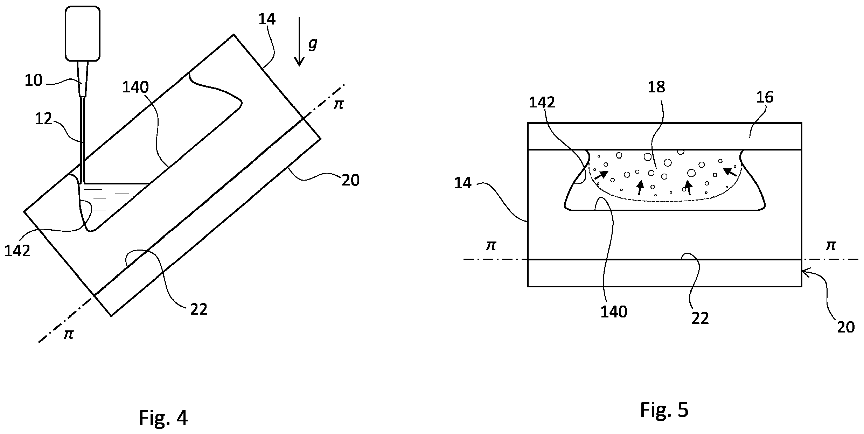

By way of example, figure 4 schematically shows a cross section of a molding station 30 according to the invention, wherein the mold holder 20 is significantly rotated around the roll axis x to expose the side walls 142 to the direct flow of liquid polyurethane 12 which falls by gravity from the dispensing nozzle 10. In particular, it can be noted that the considerable rotation (about 40° in a counterclockwise direction) allows the left-hand side wall 142 of the mold 14 to be exposed to the vertical flow, even against the marked undercut that characterizes it.

The possibility of the mold holder 20 according to the invention to rotate around both axes, both the pitch axis y and the roll axis x, allows to expose all the vertical walls 142 of the mold 14 to the direct flow. In particular, always referring to the diagram of figure 4, the opposite rotation (about 40° in a clockwise direction) allows the right-hand side wall 142 of the mold 14 to be exposed to the vertical flow. In this way it is therefore possible, during the dispensing step of the liquid polyurethane 12, to directly wet all the side walls 142 of the mold 14. As already stated above, the quantity of liquid polyurethane 12 dispensed is such that, in addition to wetting the side walls 142 of the mold 14, it also wets the bottom wall 140 by gravity.

The effect of such process is represented by a rough diagram in figure 5, where a dotted line defines the volume initially occupied by the polyurethane in liquid phase 12 and where the arrows indicate the direction of volume increase during the passage to the foam phase 18. Figure 5 also schematically shows the bubbles which are included in the polyurethane foam 18 and whose dimensions grow along the direction of volume increase.

As already described with reference to the prior art, during the initial volume increase, the polyurethane does not maintain a homogeneous composition therein. In particular it can be seen that the polyurethane foam 18 comprises very small and regular cavities in the volume initially occupied by the liquid phase, to then include larger and more irregular cavities proceeding along the direction of volume increase.

As known, this behaviour of the polyurethane causes a deterioration of the quality of the material along the direction of volume increase. However, the mold holder 20 and the method according to the invention make it possible to prevent this deterioration of quality from affecting the semi worked item and, even more, the finished footwear. In fact, the outer surface of the semi worked item, originating in the part of mold 14 initially wetted by the polyurethane in liquid phase 12, is homogeneous and compact. Here, the cavities included in the polyurethane foam 18 are microscopic and not visible and this gives this part of the semi worked item a high-quality appearance. Conversely, the upper surface of the semi worked item, which originates in the portion of mold 14 filled thanks to the growth of the volume of the polyurethane foam 18, is characterized by the presence of macroscopic cavities and bubbles distributed in an irregular manner. This gives this part of the semi worked item a low-quality appearance. However, unlike what happens in the prior art, the less valuable part of the semi worked item obtained by the molding station 30 and/or the method according to the invention, has a reduced extension and it is completely covered by the upper structure of the footwear. In other words, no portion of low-quality semi worked items which could cause limitations to the overall quality of the footwear remains visible.

Such effect is obtained also in the particularly difficult event that the mold 14 comprises a marked undercut (as in the diagram of figures 4 and 5) intended to obtain a sole that widens very much downwards.

All the portions of the semi worked item which are visible in the finished footwear originate from parts of the mold 14 which during manufacturing are directly wetted by the flow of liquid polyurethane 12.

Moreover, the possibility of rotating the mold 14 as described above allows to easily expose all the parts of the side walls 142 to the spray of the silicone-based preparation and/or to the coating paint of the semi worked item, even in the presence of marked undercuts.

As the skilled person can easily understand, the invention allows to overcome the drawbacks highlighted above with reference to the prior art. In particular, the present invention provides a mold holder 20, a molding station 30 and a method for manufacturing polyurethane semi worked items, which allow the semi worked item to have a more valuable appearance.

It is clear that the specific features are described in relation to various embodiments of the invention with exemplifying and non-limiting intent. Obviously, a person skilled in the art may make further modifications and variations to this invention, in order to meet contingent and specific requirements. Furthermore, such modifications and variations are included within the scope of protection of the invention, as defined by the following claims.

## Claims

1. Molding station (30) for manufacturing polyurethane semi worked items, comprising a mold holder (20), a mold (14) for manufacturing polyurethane semi worked items, and a nozzle (10) for dispensing polyurethane in liquid state (12), wherein:
- the mold holder (20) comprises a rest surface (22) for holding the mold (14), means (24) for rotating the rest surface (22) around a pitch axis y and means (26) for rotating the rest surface (22) around a roll axis x;
- the mold (14) is constrained to the rest surface (22) of the mold holder (20);
- the mold (14) comprises a bottom wall (140) and side walls (142), so as to define a cavity, and a cover (16) suitable for closing the cavity; and wherein
- the dispensing nozzle (10) comprises moving means (32) and dispensing control means (34), controlled electronically, and is suitable for dispensing polyurethane in liquid state (12) in the mold (14).

2. Molding station (30) according to claim 1, wherein the rest surface (22) mainly develops in a plane π and wherein the projections on the plane π of the pitch axis y and of the roll axis x are perpendicular the one to the other.

3. Molding station (30) according to claim 1 or 2, wherein the means (24) for rotating the rest surface (22) around the pitch axis y comprise a pitch hinge (240) and a pitch actuator (242); and the means (26) for rotating the rest surface (22) around the roll axis x comprise a roll hinge (260) and a roll actuator (262).

4. Molding station (30) according to claim 3, wherein the pitch actuator (242) and/or the roll actuator (262) comprises an electronically controlled electric motor.

5. Molding station (30) according to claim 4, wherein the electric motor of the pitch actuator (242) and/or the electric motor of the roll actuator (262) and the moving means (32) and the dispensing control means (34) of the dispensing nozzle (10) are electronically controlled by a single control unit (36).

6. Molding station (30) according to claim 1, further comprising a mechanism (160) for opening/closing the mold (14), suitable for moving the cover (16) with respect to the mold (14) between an open position and a closed position, and wherein the mechanism (160) for opening/closing the mold (14) is electronically controlled by the control unit (36).

7. Molding method for manufacturing polyurethane semi worked items, comprising the steps of:
- providing a mold holder (20) comprising:
- a rest surface (22),
- means (24) for rotating the rest surface (22) around a pitch axis y, and
- means (26) for rotating the rest surface (22) around a roll axis x;
- constraining a mold (14) on the rest surface (22) of the mold holder (20);
- providing a nozzle (10) for dispensing polyurethane in liquid state (12);
- dispensing polyurethane in liquid state (12) in the mold (14); and
- during the step of dispensing polyurethane, rotating the mold holder (20) around the pitch axis y and/or around the roll axis x.

8. Method according to claim 7, further comprising, during the step of dispensing polyurethane, the step of moving the dispensing nozzle (10) in a direction parallel to the pitch axis y and/or in a direction parallel to the roll axis x.

9. Method according to claim 7 or 8, wherein two or more of the steps of:
- dispensing polyurethane;
- rotating the mold holder (20) around the pitch axis y;
- rotating the mold holder (20) around the roll axis x;
- moving the dispensing nozzle (10) in a direction parallel to the pitch axis y;
- moving the dispensing nozzle (10) in a direction parallel to the roll axis x; are electronically controlled in a joint manner according to a predefined logic.

10. Method according to any one of claims 7 to 9, wherein the step of constraining the mold (14) on the rest surface (22) of the mold holder (20) comprises the step of providing a mold (14) comprising a bottom wall (140) and side walls (142), and wherein the step of dispensing polyurethane comprises the step of wetting at least partially the side walls (142) of the mold (14) with the polyurethane in liquid state (12).

11. Method according to any one of the claims 7 to 10, wherein the step of dispensing the polyurethane in liquid state (12) into the mold (14) comprises the step of vertically pouring the polyurethane in the liquid state (12).

12. Method according to claim 10 or 11, further comprising, before the step of dispensing the polyurethane, the steps of:
- rotating the mold holder (20) so as to expose a portion of side wall (142) of the mold (14) to a direct vertical flow of polyurethane; and
- positioning the nozzle (10) on the vertical of such portion of side wall (142).

13. Method according to any one of the claims 7 to 12, wherein the step of constraining the mold (14) on the rest surface (22) of the mold holder (20) comprises the step of providing a mold (14) comprising a cover (16), wherein a bottom wall (140) and side walls (142) of the mold (14) define a cavity which can be closed by the cover (16).

14. Method according to the previous claim, wherein, after the step of dispensing the polyurethane in liquid state (12) in the mold (14), the further step is comprised of closing the mold cavity by means of the cover (16) while the polyurethane is in the liquid state (12).

15. Method according to one or more of claims 7 to 14, comprising the step of hosting inside the closed mold (14) the reaction based on which the polyurethane passes from the liquid state (12) to the foam state (18).

## Patentansprüche

1. Formstation (30) zur Herstellung von Polyurethan-Halbzeugen, umfassend einen Formhalter (20), eine Form (14) zur Herstellung von Polyurethan-Halbzeugen und eine Düse (10) zur Ausgabe von Polyurethan in flüssigem Zustand (12), wobei:
- der Formhalter (20) eine Auflagefläche (22) zum Halten der Form (14), Mittel (24) zum Rotieren der Auflagefläche (22) um eine Nickachse y und Mittel (26) zum Rotieren der Auflagefläche (22) um eine Rollachse x umfasst;
- die Form (14) an der Auflagefläche (22) des Formhalters (20) festgelegt ist;
- die Form (14) eine Bodenwand (140) und Seitenwände (142) umfasst, um einen Hohlraum zu definieren, und eine Abdeckung (16), die zum Verschließen des Hohlraums geeignet ist; und wobei
- die Ausgabe-Düse (10) Bewegungsmittel (32) und Ausgabesteuermittel (34) umfasst, die elektronisch gesteuert werden, und geeignet ist, Polyurethan in flüssigem Zustand (12) in die Form (14) auszugeben.

2. Formstation (30) nach Anspruch 1, wobei die Auflagefläche (22) hauptsächlich in einer Ebene π verläuft und wobei die Projektionen der Nickachse y und der Rollachse x auf die Ebene π senkrecht zueinander stehen.

3. Formstation (30) nach Anspruch 1 oder 2, wobei die Mittel (24) zum Rotieren der Auflagefläche (22) um die Nickachse y ein Nickgelenk (240) und ein Nickstellglied (242) umfassen; und die Mittel (26) zum Rotieren der Auflagefläche (22) um die Rollachse x ein Rollgelenk (260) und ein Rollstellglied (262) umfassen.

4. Formstation (30) nach Anspruch 3, wobei das Nickstellglied (242) und/oder das Rollstellglied (262) einen elektronisch gesteuerten Elektromotor umfasst.

5. Formstation (30) nach Anspruch 4, wobei der Elektromotor des Nickstellglieds (242) und/oder der Elektromotor des Rollstellglieds (262) und das Bewegungsmittel (32) und das Ausgabesteuermittel (34) der Ausgabe-Düse (10) von einer einzigen Steuereinheit (36) elektronisch gesteuert werden.

6. Formstation (30) nach Anspruch 1, ferner umfassend einen Mechanismus (160) zum Öffnen/Schließen der Form (14), der geeignet ist, die Abdeckung (16) in Bezug auf die Form (14) zwischen einer offenen Position und einer geschlossenen Position zu bewegen, und wobei der Mechanismus (160) zum Öffnen/Schließen der Form (14) durch die Steuereinheit (36) elektronisch gesteuert wird.

7. Formverfahren zur Herstellung von Polyurethan-Halbzeugen, das die folgenden Schritte umfasst:
- Bereitstellen eines Formhalters (20) mit:
- einer Auflagefläche (22),
- Mittel (24) zum Rotieren der Auflagefläche (22) um eine Nickachse y, und
- Mittel (26) zum Rotieren der Auflagefläche (22) um eine Rollachse x;
- Festlegen einer Form (14) auf der Auflagefläche (22) des Formhalters (20);
- Bereitstellen einer Düse (10) zum Ausgeben von Polyurethan in flüssigem Zustand (12);
- Ausgeben von Polyurethan in flüssigem Zustand (12) in die Form (14); und
- während dem Schritt der Ausgabe von Polyurethan, Rotieren des Formhalters (20) um die Nickachse y und/oder um die Rollachse x.

8. Verfahren nach Anspruch 7, das ferner während des Schritts der Ausgabe von Polyurethan den Schritt des Bewegens der Ausgabe-Düse (10) in einer Richtung parallel zu der Nickachse y und/oder in einer Richtung parallel zu der Rollachse x umfasst.

9. Verfahren nach Anspruch 7 oder 8, wobei zwei oder mehr der folgenden Schritte:
- Ausgabe von Polyurethan;
- Rotieren des Formhalters (20) um die Nickachse y;
- Rotieren des Formhalters (20) um die Rollachse x;
- Bewegen der Ausgabe-Düse (10) in einer Richtung parallel zur Nickachse y;
- Bewegen der Ausgabe-Düse (10) in einer Richtung parallel zur Rollachse x;
in gemeinsamer Weise gemäß einer vordefinierten Logik elektronisch gesteuert werden.

10. Verfahren nach einem der Ansprüche 7 bis 9, wobei der Schritt des Festlegens der Form (14) auf der Auflagefläche (22) des Formhalters (20) den Schritt des Bereitstellens einer Form (14) mit einer Bodenwand (140) und Seitenwänden (142) umfasst, und wobei der Schritt des Ausgebens von Polyurethan den Schritt des zumindest teilweisen Befeuchtens der Seitenwände (142) der Form (14) mit dem Polyurethan in flüssigem Zustand (12) umfasst.

11. Verfahren nach einem der Ansprüche 7 bis 10, wobei der Schritt des Ausgebens des Polyurethans in flüssigem Zustand (12) in die Form (14) den Schritt des vertikalen Gießens des Polyurethans in flüssigem Zustand (12) umfasst.

12. Verfahren nach Anspruch 10 oder 11, das ferner vor dem Schritt des Ausgebens des Polyurethans die folgenden Schritte umfasst:
- Rotieren des Formhalters (20), um einen Teil der Seitenwand (142) der Form (14) einem direkten vertikalen Strom von Polyurethan auszusetzen; und
- Positionieren der Düse (10) auf der Vertikalen eines solchen Abschnitts der Seitenwand (142).

13. Verfahren nach einem der Ansprüche 7 bis 12, wobei der Schritt des Festlegens der Form (14) auf der Auflagefläche (22) des Formhalters (20) den Schritt des Bereitstellens einer Form (14) mit einer Abdeckung (16) umfasst, wobei eine Bodenwand (140) und Seitenwände (142) der Form (14) einen Hohlraum definieren, der durch die Abdeckung (16) verschlossen werden kann.

14. Verfahren nach dem vorhergehenden Anspruch, wobei nach dem Schritt des Ausgebens des Polyurethans in flüssigem Zustand (12) in die Form (14) der weitere Schritt darin besteht, den Hohlraum mittels der Abdeckung (16) zu verschließen, während sich das Polyurethan in flüssigem Zustand (12) befindet.

15. Verfahren nach einem oder mehreren der Ansprüche 7 bis 14, umfassend den Schritt des Durchführens der Reaktion in der geschlossenen Form (14), aufgrund derer das Polyurethan vom flüssigen Zustand (12) in den Schaumzustand (18) übergeht.

## Revendications

1. Poste de moulage (30) pour la fabrication de pièces semi-ouvrées en polyuréthane, comprenant un porte-moule (20), un moule (14) pour la fabrication de pièces semi-ouvrées en polyuréthane, et une buse (10) pour la distribution de polyuréthane à l'état liquide (12), dans lequel:
- le porte-moule (20) comprend une surface de repos (22) pour maintenir le moule (14), des moyens (24) pour faire tourner la surface de repos (22) autour d'un axe de tangage y et des moyens (26) pour faire tourner la surface de repos (22) autour d'un axe de roulis x;
- le moule (14) est contraint à la surface de repos (22) du porte-moule (20);
- le moule (14) comprend une paroi de fond (140) et des parois latérales (142), de façon à définir une cavité, et un couvercle (16) apte à fermer la cavité; et dans lequel
- la buse de distribution (10) comprend des moyens de déplacement (32) et des moyens de commande de distribution (34), commandés électroniquement, et est apte à distribuer du polyuréthane à l'état liquide (12) dans le moule (14).

2. Poste de moulage (30) selon la revendication 1, dans lequel la surface de repos (22) se développe principalement dans un plan π et dans lequel les projections sur le plan π de l'axe de tangage y et de l'axe de roulis x sont perpendiculaires l'une à l'autre.

3. Poste de moulage (30) selon la revendication 1 ou 2, dans lequel les moyens (24) pour faire tourner la surface de repos (22) autour de l'axe de tangage y comprennent une articulation de tangage (240) et un actionneur de tangage (242); et les moyens (26) pour faire tourner la surface de repos (22) autour de l'axe de roulis x comprennent une articulation de roulis (260) et un actionneur de roulis (262).

4. Poste de moulage (30) selon la revendication 3, dans lequel l'actionneur de tangage (242) et/ou l'actionneur de roulis (262) comprend un moteur électrique à commande électronique.

5. Poste de moulage (30) selon la revendication 4, dans lequel le moteur électrique de l'actionneur de tangage (242) et/ou le moteur électrique de l'actionneur de roulis (262) et les moyens de déplacement (32) et les moyens de commande de distribution (34) de la buse de distribution (10) sont commandés électroniquement par une unique unité de commande (36).

6. Poste de moulage (30) selon la revendication 1, comprenant en outre un mécanisme (160) pour ouvrir/fermer le moule (14), apte à déplacer le couvercle (16) par rapport au moule (14) entre une position ouverte et une position fermée, et dans lequel le mécanisme (160) pour ouvrir/fermer le moule (14) est commandé électroniquement par l'unité de commande (36).

7. Procédé de moulage pour la fabrication de pièces semi-ouvrées en polyuréthane, comprenant les étapes:
- disposer un porte-moule (20) comprenant:
- une surface de repos (22),
- des moyens (24) pour faire tourner la surface de repos (22) autour d'un axe de tangage y, et
- des moyens (26) pour faire tourner la surface de repos (22) autour d'un axe de roulis x;
- contraindre un moule (14) sur la surface de repos (22) du porte-moule (20);
- disposer une buse (10) pour la distribution de polyuréthane à l'état liquide (12);
- distribuer du polyuréthane à l'état liquide (12) dans le moule (14); et
- pendant l'étape de distribution de polyuréthane, faire tourner le porte-moule (20) autour de l'axe de tangage y et/ou autour de l'axe de roulis x.

8. Procédé selon la revendication 7, comprenant en outre, pendant l'étape de distribution de polyuréthane, l'étape de déplacement de la buse de distribution (10) dans une direction parallèle à l'axe de tangage y et/ou dans une direction parallèle à l'axe de roulis x.

9. Procédé selon la revendication 7 ou 8, dans lequel deux étapes ou plus parmi:
- distribuer du polyuréthane;
- faire tourner le porte-moule (20) autour de l'axe de tangage y;
- faire tourner le porte-moule (20) autour de l'axe de roulis x;
- déplacer la buse de distribution (10) dans une direction parallèle à l'axe de tangage y;
- déplacer la buse de distribution (10) dans une direction parallèle à l'axe de roulis x;
sont commandées électroniquement d'une manière conjointe selon une logique prédéfinie.

10. Procédé selon l'une quelconque des revendications 7 à 9, dans lequel l'étape de contrainte du moule (14) sur la surface de repos (22) du porte-moule (20) comprend l'étape de disposition d'un moule (14) comprenant une paroi de fond (140) et des parois latérales (142), et dans lequel l'étape de distribution de polyuréthane comprend l'étape de mouillage au moins partiel des parois latérales (142) du moule (14) avec le polyuréthane à l'état liquide (12).

11. Procédé selon l'une quelconque des revendications 7 à 10, dans lequel l'étape de distribution de polyuréthane à l'état liquide (12) dans le moule (14) comprend l'étape de coulage vertical du polyuréthane à l'état liquide (12).

12. Procédé selon la revendication 10 ou 11, comprenant en outre, avant l'étape de distribution de polyuréthane, les étapes:
- faire tourner le porte-moule (20) de façon à exposer une partie de la paroi latérale (142) du moule (14) à un écoulement vertical direct de polyuréthane; et
- positionner la buse (10) sur la verticale de cette partie de la paroi latérale (142).

13. Procédé selon l'une quelconque des revendications 7 à 12, dans lequel l'étape de contrainte du moule (14) sur la surface de repos (22) du porte-moule (20) comprend l'étape de disposition d'un moule (14) comprenant un couvercle (16), dans lequel une paroi de fond (140) et des parois latérales (142) du moule (14) définissent une cavité qui peut être fermée par le couvercle (16).

14. Procédé selon la revendication précédente, dans lequel, après l'étape de distribution de polyuréthane à l'état liquide (12) dans le moule (14), l'étape suivante consiste à fermer la cavité du moule au moyen du couvercle (16) tandis que le polyuréthane est à l'état liquide (12).

15. Procédé selon une ou plusieurs des revendications 7 à 14, comprenant l'étape consistant à accueillir, à l'intérieur du moule fermé (14), la réaction sur la base de laquelle le polyuréthane passe de l'état liquide (12) à l'état de mousse (18).
